# EUROPÄISCHE PATENTSCHRIFT

(11) **EP 1 689 797 B1**
(45) Veröffentlichungstag und Bekanntmachung des Hinweises auf die Patenterteilung: **23.12.2009**
(21) Anmeldenummer: 04804502.5
(22) Anmeldetag: 22.10.2004
(51) Int. Cl.: C08F 299/00, C08F 8/00

(54) **RADIKALISCH GEKOPPELTE PTFE-POLYMER-COMPOUNDS UND VERFAHREN ZU IHRER HERSTELLUNG**
RADICALLY COUPLED PTFE POLYMER COMPOUNDS AND METHOD FOR THE PRODUCTION THEREOF
COMPOSES POLYMERES PTFE COUPLES PAR VOIE RADICALAIRE ET PROCEDE DE PRODUCTION CORRESPONDANT

(30) Priorität: 30.10.2003 DE 10351814
(43) Veröffentlichungstag der Anmeldung: 16.08.2006
(73) Patentinhaber: Leibniz-Institut für Polymerforschung Dresden e.V., 01069 Dresden (DE)
(72) Erfinder: LEHMANN, Dieter, 01640 Coswig (DE); KLÜPFEL, Bernd, 01277 Dresden (DE)
(74) Vertreter: Rauschenbach, Marion
(86) Internationale Anmeldenummer: PCT/EP2004/052619
(87) Internationale Veröffentlichungsnummer: WO 2005/042599

(56) Entgegenhaltungen:
- JP-A- 63 007 455
- US-A- 5 169 675
- PATENT ABSTRACTS OF JAPAN Bd. 011, Nr. 222 (C-435), 18. Juli 1987 (1987-07-18) & JP 62 036431 A (INOUE MTP CO LTD), 17. Februar 1987 (1987-02-17)
- PATENT ABSTRACTS OF JAPAN Bd. 2003, Nr. 03, 5. Mai 2003 (2003-05-05) & JP 2002 338931 A (HITACHI CABLE LTD), 27. November 2002 (2002-11-27)
- PATENT ABSTRACTS OF JAPAN Bd. 014, Nr. 252 (E-0934), 30. Mai 1990 (1990-05-30) & JP 02 072771 A (FUJI PHOTO FILM CO LTD; others: 01), 13. März 1990 (1990-03-13)

## Beschreibung

Die Erfindung bezieht sich auf das Gebiet der Chemie und betrifft radikalisch gekoppelte PTFE-Polymer-Compounds, die beispielsweise als Tribowerkstoffe zur Anwendung kommen können und ein Verfahren zu ihrer Herstellung.

"Bei der Suche nach geeigneten Polymermaterialien für den Kernreaktorbau wurde festgestellt, daß PTFE - im Gegensatz zu seiner hohen chemischen und thermischen Stabilität - außerordentlich strahlenempfindlich ist. Es wird sowohl unter inerten Bedingungen als auch in Gegenwart von Sauerstoff schon bei geringer Energiedosis abgebaut, bereits bei 0,2 bis 0,3 kGy spröde und bei < 100 kGy bröckelig.
Ab etwa 360°C wird der rein strahlenchemische Abbau merklich von einem thermischen überlagert.
Wegen des stochastischen Verlaufs des strahlenchemischen Abbaus entstehen Reaktionsprodukte mit einem breiten Kettenlängenspektrum.
Bei Bestrahlung von PTFE in Gegenwart von Sauerstoff werden aus den zunächst entstehenden Perfluoralkylradikalen Peroxy- und Alkoxyradikale gebildet.
Über die Zwischenstufe der Bildung des Alkoxyradikals wird das endständige Perfluoralkylradikal unter Kettenverkürzung und Bildung von Carbonyldifluorid schrittweise abgebaut.

Dagegen entstehen aus den seitenständigen Alkoxyradikalen Perfluoralkansäurefluoride und endständige erfluoralkylradikale. 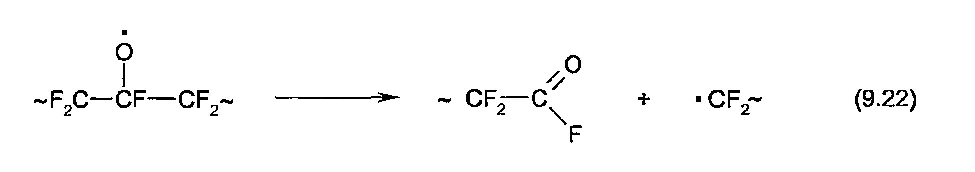 ...Ungesinterte und unverpreßte PTFE-Emulsions- und -Suspensionspolymerisate sind von faserig-filzigem Charakter. Eine Übertragung z. B. der antiadhäsiven und Gleiteigenschaften des PTFE auf andere Medien durch Einarbeitung in wäßrige oder organische Dispersionen, Polymere, Farben, Lacke, Harze oder Schmierstoffe ist nicht möglich, weil dieses PTFE sich nicht homogenisieren läßt, sondern zur Klumpenbildung neigt, agglomeriert, aufschwimmt oder sich absetzt.
Durch die Einwirkung energiereicher Strahlung mit einer Energiedosis von etwa 100 kGy wird aus den faserig-filzigen Polymerisaten infolge partiellen Abbaus der Polymerketten ein rieselfähiges Feinpulver erhalten. Dieses Pulver enthält noch lockere Agglomerate, die leicht zu Primärteilchen mit < 5 µm Partikeldurchmesser zerteilt werden können. Bei Bestrahlung in Gegenwart von Reaktanten werden funktionelle Gruppen in das Polymere eingebaut. Erfolgt die Bestrahlung in Luft, so werden nach Gl. (9.22) (und anschließender Hydrolyse der -COF-Gruppen durch Luftfeuchtigkeit) Carboxylgruppen erhalten. Wird vor der Bestrahlung (NH₄)₂SO₃ zugemischt, dann sind S-haltige Gruppen zu erzielen. Diese funktionellen Gruppen mindern die Hydrophobie und Organophobie des PTFE so wesentlich, daß die gewonnenen Feinpulver gut mit anderen Medien homogenisiert werden können. Die positiven Eigenschaften des PTFE, wie die exzellenten Gleit-, Trenn- und Trockenschmiereigenschaften sowie die hohe chemische und thermische Stabilität, bleiben erhalten. Carboxyl- und Sulfogruppen, an die perfluorierte Kette gebunden, besitzen ebenfalls hohe chemische Inertheit.
Wegen der Unlöslichkeit des PTFE und seiner Abbauprodukte (mit Ausnahme der sehr niedermolekularen Produkte) können die üblichen Methoden der Molmassenbestimmung nicht angewandt werden. Die Molmassenbestimmung muß auf indirektem Wege erfolgen." [A. Heger et al., Technologie der Strahlenchemie an Polymeren, Akademie-Verlag Berlin 1990]

Nachteilig wirkt sich vielfach die Unverträglichkeit mit anderen Materialien aus. Durch eine chemische Aktivierung von PTFE durch die bekannten Verfahren mit (1.) Natriumamid in flüssigem Ammoniak und (2.) Alkalialkyl- und Alkali-Aromaten-Verbindungen in aprotischen inerten Lösungsmitteln ist eine Modifizierung zu erreichen. Über diese Modifizierungen können reaktiv oder auch nur über adsorptive Kräfte verbesserte Grenzflächenwechselwirkungen erreicht werden.

Die Verwertung der Produkte des PTFE-Abbaus erfolgt in vielfältigen Einsatzgebieten - so auch als Additiv zu Kunststoffen zum Zwecke der Erzielung von Gleit- oder Antihafteigenschaften. Die Feinpulversubstanzen liegen mehr oder minder fein dispergiert als Füllstoffkomponente in einer Matrix vor [Ferse et al., Plaste u. Kautschuk, 29 (1982), 458; Ferse et al. DD-PS 146 716 (1979)]. Beim Lösen der Matrixkomponente ist das PTFE-Feinpulver eliminierbar bzw. wird zurückerhalten.

Obwohl in den Einsatzgebieten von PTFE-Feinpulver eine Verbesserung der Eigenschaften im Vergleich zu den kommerziellen fluorcarbonfreien Additiven erreicht wird, ist die Unverträglichkeit, die Unlöslichkeit, die Einlagerung und auch inhomogene Verteilung für viele Einsatzgebiete von Nachteil.

Weiterhin bekannt sind gepfropfte fluorhaltige Kunststoffe (US 5,576,106), die aus fluorhaltigen Kunststoffpartikeln bestehen, an deren Oberfläche eine nichthomopolymerisierte ethylenisch ungesättigte Verbindung angepfropft ist. Dabei können die nichthomopolymerisierten ethylenisch ungesättigten Verbindungen Säuren, Ester oder Anhydride sein.
Hergestellt werden diese gepfropften fluorhaltigen Kunststoffe, indem das fluorhaltige Kunststoffpulver in Gegenwart der ethylenisch ungesättigten Verbindung einer Quelle von ionisierender Strahlung ausgesetzt wird. Dabei erfolgt die Anbindung der ethylenisch ungesättigten Verbindungen an die Oberfläche der fluorhaltigen Kunststoffpartikel.

Aufgabe der Erfindung ist es, radikalisch gekoppelte PTFE-Polymer-Compounds anzugeben, welche bei vergleichbaren Gleiteigenschaften verbesserte Verschleißfestigkeiten aufweisen und dadurch die Lebensdauer der Bauteile aus diesen Compounds verlängert ist, und weiterhin ein einfaches und leistungsfähiges Verfahren zur Herstellung derartiger Compounds anzugeben.

Die Aufgabe wird durch die in den Ansprüchen angegebene Erfindung gelöst. Weiterbildungen sind Gegenstand der Unteransprüche.

Die erfindungsgemäßen, radikalisch gekoppelten PTFE-Polymer-Compounds bestehen aus strahlenchemisch oder plasmachemisch modifizierten PTFE-Pulvern, an deren Partikeloberfläche olefinisch ungesättigte Polymere in Schmelze über eine reaktive Umsetzung radikalisch gekoppelt sind.

Dabei ist vorteilhafterweise die Bindungsstelle der olefinisch ungesättigten Polymere mit der PTFE-Partikeloberfläche an der Polymerkette statistisch verteilt.

Vorteilhafterweise ist das PTFE-Pulver strahlenchemisch modifiziert.

Ebenfalls vorteilhafterweise ist das PTFE-Pulver mit einer Strahlendosis von größer 50 kGy und vorzugsweise mit einer Strahlendosis von größer 100 kGy strahlenchemisch modifiziert.

Es ist auch vorteilhaft, dass das PTFE-Pulver in Gegenwart von Reaktanten, vorzugsweise unter Sauerstoffeinfluss, strahlenchemisch modifiziert ist.

Weiterhin vorteilhafterweise sind als olefinisch ungesättigte Polymere solche Polymere, die olefinisch ungesättigte Gruppen in der Hauptkette und/oder in der Seitenkette besitzen, radikalisch gekoppelt.

Derartig vorteilhafte olefinisch ungesättigte Polymere sind radikalisch gekoppelte SBS, ABS, SBR, NBR, NR sowie weitere Butadien- und/oder Isopren-Homo-, -Co- oder -Ter-Polymere.

Bei dem erfindungsgemäßen Verfahren zur Herstellung von radikalisch gekoppelten PTFE-Polymer-Compounds werden PTFE-Pulver mit reaktiven Perfluoralkyl-(peroxy-)Radikal-Zentren nach einer strahlenchemischen und/oder plasmachemischen Modifizierung in Schmelze unter Zugabe von olefinisch ungesättigten Polymeren reaktiv umgesetzt.

Vorteilhafterweise wird strahlenchemisch modifiziertes PTFE-Pulver eingesetzt.

Ebenfalls vorteilhafterweise wird PTFE-Pulver eingesetzt, welches mit einer Strahlendosis von größer 50 kGy und vorzugsweise mit einer Strahlendosis von größer 100 kGy strahlenchemisch modifiziert worden ist.

Es ist auch vorteilhaft, wenn PTFE-Pulver in Gegenwart von Reaktanten, vorzugsweise unter Sauerstoffeinfluss, strahlenchemisch modifiziert wird.

Weiterhin ist es von Vorteil, wenn das PTFE-Pulver als Mikropulver eingesetzt wird.

Und auch von Vorteil ist es, wenn die Reaktion in Schmelze in einem Schmelzemischer, vorzugsweise in einem Extruder, realisiert wird.

Weiterhin vorteilhafterweise werden als olefinisch ungesättigte Polymere solche Polymere, die olefinisch ungesättigte Gruppen in der Hauptkette und/oder in der Seitenkette besitzen, eingesetzt.

Als derartig vorteilhafte olefinisch ungesättigte Polymere werden SBS, ABS, SBR, NBR, NR sowie weitere Butadien- und/oder Isopren-Homo-, -Co- oder -Ter-Polymere eingesetzt.

Die erfindungsgemäße radikalische Kopplung von PTFE-Mikropulvern mit olefinisch ungesättigten Polymeren über eine (Schmelze-)Modifizierungsreaktion führt zur Kompatibilisierung und festen Einbindung in einer Matrix, was vorteilhaft für Tribowerkstoffe ausgenutzt werden kann. So können spezielle Thermoplaste, Elastomere und spezielle Duromere mit PTFE über reaktive Umsetzung/Extrusion in der Form modifiziert werden, dass neben einer vergleichbaren Gleitreibung eine erhöhte Verschleißfestigkeit erreicht wird, im Vergleich zu den reinen Ausgangsstoffen und den physikalischen Mischungen mit PTFE.

In der vorzugsweise strahlenchemischen Modifizierung von PTFE zu PTFE-Mikropulvern entstehen bevorzugt persistente (langlebige) reaktiven Perfluoralkyl-(peroxy-)Radikal-Zentren, die überraschenderweise zur Kopplung mit olefinisch ungesättigten Polymeren in einer reaktiven Umsetzung befähigt sind. Mit einer Plasmabehandlung können oberflächlich ähnliche reaktive Perfluoralkyl-(peroxy-)Radikal-Zentren erzeugt und für diese Kopplungsreaktion eingesetzt werden, jedoch sind diese reaktiven Perfluoralkyl-(peroxy-)Radikal-Zentren in ihrer Verteilung und Dichte im Vergleich zu den strahlenchemisch hergestellten reaktiven Perfluoralkyl-(peroxy-)Radikal-Zentren nicht optimal. So konnte über IR-Spektroskopie nach der Schmelzemodifizierung im Laborkneter für SBS, ABS und auch olefinisch ungesättigte Elastomere wie z. B. SBR, NBR, NR, Polybutadien usw. mit strahlenchemisch modifiziertem PTFE-(Mikro-)Pulver und nach Abtrennung der ungebundenen Matrix eine chemische Kopplung nachgewiesen werden, d. h. die Polymere waren über Extraktion vom PTFE-(Mikro-)Pulver nicht mehr abtrennbar - im Vergleich zu physikalischen Mischungen, in denen das PTFE unverändert quantitativ abgetrennt werden konnte.

Die erfindungsgemäße radikalische Kopplung des PTFE und die dadurch erfolgte Einbindung/Kompatibilisierung in eine Matrix führt zur Verbesserung der Material- und der Gleitreibungseigenschaften sowie zur Erhöhung der Verschleißfestigkeit im Vergleich zu den unmodifizierten Ausgangsstoffen und den physikalischen Mischungen mit PTFE. Zur Verbesserung der Verschleißfestigkeit ist es weiter vorteilhaft, die chemisch gekoppelten PTFE-Partikel gleichzeitig als Speiche rmedium für das PFPE-Additiv (PFPE = Perfluorpolyether) zu nutzen, das mit der Polymermatrix unverträglich ist und zur Erniedrigung des Reibungskoeffizienten bei gleichzeitiger Erhöhung der Verschleißfestigkeit beiträgt.

Erfindungsgemäß hergestellt werden die radikalisch gekoppelten PTFE-Polymer-Compounds, indem beispielsweise ein PTFE-Emulsionspolymerisat (TF 2025 von Dyneon) mit 200 kGy bestrahlt und ein PTFE-Suspensionspolymerisat (TF 1 750 von Dyneon) an Luft mit 500 kGy bestrahlt wird. Während der Bestrahlung in 50 kGy-Schritten unter Abbau zu PTFE-Mikropulver werden reaktiven Perfluoralkyl-(peroxy-)Radikal-Zentren erzeugt, die in Gegenwart von Luft sich teilweise in relativ stabile/langlebige Peroxyradikale umwandeln.

Nach dem Stand der Technik ist bekannt, dass diese PTFE-(Mikro-)Pulver getempert werden können. Dadurch werden die reaktiven Perfluoralkyl-(peroxy-)Radikal-Zentren insbesondere mit steigenden Temperaturen zerstört [K. Schierholz u. a., J. Polym. Sci. Part B, Polymere Physics, Vol. 37, 2404-2411 (1999)].
Bei dem erfindungsgemäßen Verfahren werden PTFE-(Mikro-)Pulver mit den entstandenen reaktiven Perfluoralkyl-(peroxy-)Radikal-Zentren eingesetzt.
Die reaktiven Perfluoralkyl-(peroxy-)Radikal-Zentren werden gezielt für die Kopplung mit olefinisch ungesättigten Polymeren genutzt, indem in der Schmelzemodifizierungsreaktion/reaktiven Extrusion über eine radikalische Kopplung die chemisch gekoppelten PTFE-Polymer-Compounds entstehen.
Eine derartige Kopplung von olefinisch ungesättigten Polymeren an der Oberfläche von PTFE-Pulverpartikeln konnte vor der Erfindung noch nicht realisiert werden.

Durch die chemische Kopplung weisen diese Produkte verbesserte mechanische und tribologische Eigenschaften auf. Diese Produkte sind vor allem von Interesse für Gleitreibungsprozesse. Durch die radikalische Modifizierung/Kompatibilisierung des PTFE-Partikels mit dem Matrix-Material wird eine gute Anbindung und eine Verbesserung der Verschleißfestigkeit erreicht, da das PTFE-Korn nicht durch mechanische Beanspruchung aus dem Matrix-Material herausgerieben werden kann. Da das PTFE-Korn in direkter Wechselwirkung mit der Matrix steht, werden im Vergleich zu den physikalischen Mischungen je nach Anbindungsgrad auch verbesserte Materialeigenschaften beobachtet.

Mit der chemischen Kopplung des PTFE in der Matrix werden neue Materialien erhalten, die bei vergleichbaren Gleitreibungskoeffizienten verbesserte Verschleißfestigkeiten, d. h. eine erhöhte Lebensdauer in den Anwendungen aufweisen. Ferner wird durch Zugabe von PFPE eine weitere Erniedrigung der Gleitreibungskoeffizienten und eine spürbare Verbesserung der Verschleißfestigkeit erzielt, wobei das chemisch gekoppelte PTFE zusätzlich als Speichermedium fungiert.

Im Weiteren wird die Erfindung an mehreren Ausführungsbeispielen näher erläutert.

### Vergleichsbeispiel 1: Schmelzemodifizierung von SBS mit PTFE-Mikropulver, unbestrahlt

40g SBS (Cariflex TR 1102 S, stabilisiert) wird bei 160°C im Laborkneter mit 60 U/min aufgeschmolzen. Nach 3 Minuten werden 20 g thermisch abgebautes PTFE-Polymerisat (TF 9205 von Dyneon, unbestrahlt) zudosiert. 5 Minuten nach der PTFE-Zugabe wird der Versuch abgebrochen und das Material aus der Kneterkammer entfernt. Das SBS-Matrixmaterial wird durch Lösen in Methylenchlorid und Zentrifugieren vom PTFE-Festprodukt abgetrennt. Das Festprodukt/der Rückstand wird erneut mit Methylenchlorid aufgeschlämmt. Das Lösen/Extrahieren und Zentrifugieren wurde 4-mal wiederholt, dann das PTFE-Festprodukt abgetrennt und getrocknet.
Die IR-spektroskopische Untersuchung des abgetrennten gereinigten PTFE-Mikropulvers ergab kein chemisch gekoppeltes PTFE-SBS-Material. Es werden keine SBS-Absorptionen im IR-Spektrum gefunden. Diese physikalische PTFE-SBS-Mischung dient als Standard für die Messung des Gleitreibungskoeffizienten und der Verschleißfestigkeit im Rahmen der tribologischen Untersuchungen.

### Beispiel 1: Schmelzemodifizierung von SBS mit PTFE-Emulsionspolymerisat, bestrahlt mit 500kGy

Versuchsdurchführung und Abtrennung der Polymer-Matrix erfolgte analog Vergleichsbeispiel 1, es werden jedoch 20 g PTFE-Emulsionspolymerisat (TF 2025 von Dyneon), die mit 500 kGy bestrahlt wurden, verwendet.
Die IR-spektroskopische Untersuchung des abgetrennten und gereinigten PTFE-Mikropulvers ergab sehr starke SBS-Absorptionen neben denen des PTFE als Nachweis für chemisch gekoppeltes PTFE-SBS-Material. Im Vergleichsbeispiel 1 (physikalische Mischung) war nur reines PTFE im IR-Spektrum nachweisbar.
Die tribologischen Untersuchungen ergaben, dass das chemisch gekoppelte PTFE-SBS-Material einen vergleichbaren Gleitreibungskoeffizienten zur physikalischen Mischung aufweist, dass aber eine wesentlich erhöhte Verschleißfestigkeit zu beobachten ist. Der Verschleiß beim Klötzchen/Ring-Versuch mit dem chemisch gekoppelten Material weist eine Senkung auf 35 % im Vergleich zur physikalischen Mischung (Vergleichsbeispiel 1) auf.

### Beispiel 2: Schmelzemodifizierung von SBS mit PTFE-Suspensionspolymerisat, bestrahlt mit 500kGy

Versuchsdurchführung und Abtrennung der Polymer-Matrix erfolgte analog Vergleichsbeispiel 1, es werden jedoch 20 g PTFE-Suspensionspolymerisat (TF 1750 von Dyneon), die mit 500 kGy bestrahlt wurden, verwendet.
Die IR-spektroskopische Untersuchung des abgetrennten und gereinigten PTFE-Mikropulvers ergab starke SBS-Absorptionen neben denen des PTFE als Nachweis für chemisch gekoppeltes PTFE-SBS-Material. Im Vergleichsbeispiel 1 (physikalische Mischung) war nur reines PTFE im IR-Spektrum nachweisbar.
Die tribologischen Untersuchungen ergaben, dass das chemisch gekoppelte PTFE-SBS-Material einen vergleichbaren Gleitreibungskoeffizienten zur physikalischen Mischung aufweist, dass aber eine wesentlich erhöhte Verschleißfestigkeit zu beobachten ist. Der Verschleiß beim Klötzchen/Ring-Versuch mit dem chemisch gekoppelten Material weist eine Senkung auf 48 % im Vergleich zur physikalischen Mischung (Vergleichsbeispiel 1) auf.

### Vergleichsbeispiel 2: Schmelzemodifizierung von SBR mit PTFE-Mikropulver, unbestrahlt

40 g SBR-Elastomer werden kleingeschnitten bei 140°C im Laborkneter mit 60 U/min plastifiziert. Nach 2 Minuten werden 20 g thermisch abgebautes PTFE-Polymerisat (TF 9205 von Dyneon, unbestrahlt) zudosiert. 5 Minuten nach der PTFE-Zugabe wird der Versuch abgebrochen und das Material aus der Kneterkammer entfernt. Das SBR-Matrixmaterial wird durch Lösen in Methylenchlorid und Zentrifugieren vom PTFE-Festprodukt abgetrennt. Das Festprodukt/der Rückstand wird erneut mit Methylenchlorid aufgeschlämmt. Das Lösen/Extrahieren und Zentrifugieren wurde 4-mal wiederholt, dann das PTFE-Festprodukt abgetrennt und getrocknet.
Die IR-spektroskopische Untersuchung des abgetrennten gereinigten PTFE-Mikropulvers ergab kein chemisch gekoppeltes PTFE-SBR-Material. Es werden keine SBR-Absorptionen im IR-Spektrum gefunden. Diese physikalische PTFE-SBR-Mischung dient nach Vulkanisation als Standard für die Messung des Gleitreibungskoeffizienten und der Verschleißfestigkeit im Rahmen der tribologischen Untersuchungen.

### Beispiel 3: Schmelzemodifizierung von SBR mit PTFE-Emulsionspolymerisat, bestrahlt mit 500kGy

Versuchsdurchführung und Abtrennung der Polymer-Matrix erfolgte analog Vergleichsbeispiel 2, es werden jedoch 20 g PTFE-Emulsionspolymerisat (TF 2025 von Dyneon), die mit 500 kGy bestrahlt wurden, verwendet.
Die IR-spektroskopische Untersuchung des abgetrennten und gereinigten PTFE-Mikropulvers ergab sehr starke SBR-Absorptionen neben denen des PTFE als Nachweis für chemisch gekoppeltes PTFE-SBR-Material. Im Vergleichsbeispiel 2 (physikalische Mischung) war nur reines PTFE im IR-Spektrum nachweisbar.
Die tribologischen Untersuchungen wurden an vulkanisierten Probekörpern durchgeführt - die Versuche ergaben, dass das chemisch gekoppelte PTFE-SBR-Material einen vergleichbaren Gleitreibungskoeffizienten zu der physikalischen Mischung (Vergleichbeispiel 2) aufweist, dass aber eine wesentlich erhöhte Verschleißfestigkeit zu beobachten ist. Der Verschleiß beim Klötzchen/Ring-Versuch wies eine Senkung auf 30 % auf.
Als weiterführende tribologische Untersuchung wurde kurz vor Abbruch des Laborkneterversuchs noch 0,5 Ma.-% PFPE (Perfluorpolyether, DuPont) zugegeben, was ergab, dass die vulkanisierten Probekörper Gleitreibungskoeffizienten im Vergleich zu der physikalischen Mischung (Vergleichbeispiel 2) einen um ca. 30 % niedrigeren Wert aufweist und dass eine Zunahme der Verschleißfestigkeit zu beobachten ist. Der Verschleiß beim Klötzchen/Ring-Versuch wies eine Senkung auf 15 % auf.

### Beispiel 4: Schmelzemodfizierung von SBR mit PTFE-Suspensionspolymerisat, bestrahlt mit 500kGy

Versuchsdurchführung und Abtrennung der Polymer-Matrix erfolgte analog Vergleichsbeispiel 2, es werden jedoch 20 g PTFE-Suspensionspolymerisat (TF 1750 von Dyneon), die mit 500 kGy bestrahlt wurden, verwendet.
Die IR-spektroskopische Untersuchung des abgetrennten und gereinigten PTFE-Mikropulvers ergab starke SBR-Absorptionen neben denen des PTFE als Nachweis für chemisch gekoppeltes PTFE-SBR-Material. Im Vergleichsbeispiel 2 (physikalische Mischung) war nur reines PTFE im IR-Spektrum nachweisbar.
Die tribologischen Untersuchungen wurden an vulkanisierten Probekörpern durchgeführt - die Versuche ergaben, dass das chemisch gekoppelte PTFE-SBR-Material einen vergleichbaren Gleitreibungskoeffizienten zu der physikalischen Mischung (Vergleichsbeispiel 2) aufweist, dass aber eine wesentlich erhöhte Verschleißfestigkeit zu beobachten ist. Der Verschleiß beim Klötzchen/Ring-Versuch wies eine Senkung auf 43 % auf.
Als weiterführende tribologische Untersuchung wurde kurz vor Abbruch des Laborkneterversuchs noch 0,5 Ma.-% PFPE (Perfluorpolyether, DuPont) zugegeben, was ergab, dass die vulkanisierten Probekörper Gleitreibungskoeffizienten im Vergleich zu der physikalischen Mischung (Vergleichsbeispiel 2) einen um ca. 30 % niedrigeren Wert aufweist und dass eine Zunahme der Verschleißfestigkeit zu beobachten ist. Der Verschleiß beim Klötzchen/Ring-Versuch wies eine Senkung auf 18 % auf.

### Vergleichsbeispiel 3: Schmelzemodifizierung von ABS mit PTFE-Mikropulver, unbestrahlt

40 g ABS werden bei 210°C im Laborkneter mit 80 U/min aufgeschmolzen. Nach 3 Minuten werden 20 g thermisch abgebautes PTFE-Polymerisat (TF 9205 von Dyneon, unbestrahlt) zudosiert. 5 Minuten nach der PTFE-Zugabe wird der Versuch abgebrochen und das Material aus der Kneterkammer entfernt. Das ABS-Matrixmaterial wird durch Lösen in Methylenchlorid und Zentrifugieren vom PTFE-Festprodukt abgetrennt. Das Festprodukt/der Rückstand wird erneut mit Methylenchlorid aufgeschlämmt. Das Lösen/Extrahieren und Zentrifugieren wurde 4-mal wiederholt, dann das PTFE-Festprodukt abgetrennt und getrocknet.
Die IR-spektroskopische Untersuchung des abgetrennten und gereinigten PTFE-Mikropulvers ergab kein chemisch gekoppeltes PTFE-ABS-Material. Es werden keine ABS-Absorptionen im IR-Spektrum gefunden. Diese physikalische PTFE-ABS-Mischung dient als Standard für die Messung des Gleitreibungskoeffizienten und der Verschleißfestigkeit im Rahmen der tribologischen Untersuchungen.

### Beispiel 5: Schmelzemodifizierung von ABS mit PTFE-Emulsionspolymerisat, bestrahlt mit 500kGy

Versuchsdurchführung und Abtrennung der Polymer-Matrix erfolgte analog Vergleichsbeispiel 3, es werden jedoch 20 g PTFE-Emulsionspolymerisat (TF 2025 von Dyneon), die mit 500 kGy bestrahlt wurden, verwendet.
Die IR-spektroskopische Untersuchung des abgetrennten und gereinigten PTFE-Mikropulvers ergab sehr starke ABS-Absorptionen neben denen des PTFE als Nachweis für chemisch gekoppeltes PTFE-ABS-Material. Im Vergleichsbeispiel 3 (physikalische Mischung) war nur reines PTFE im IR-Spektrum nachweisbar.
Die tribologischen Untersuchungen ergaben, dass das chemisch gekoppelte PTFE-ABS-Material einen vergleichbaren Gleitreibungskoeffizienten zur physikalischen Mischung aufweist, dass aber eine wesentlich erhöhte Verschleißfestigkeit zu beobachten ist. Der Verschleiß beim Klötzchen/Ring-Versuch mit dem chemisch gekoppelten Material weist eine Senkung auf 50 % im Vergleich zur physikalischen Mischung (Vergleichsbeispiel 3) auf.

### Beispiel 6: Schmelzemodifizierung von ABS mit PTFE-Suspensionspolymerisat bestrahlt mit 500kGy

Versuchsdurchführung und Abtrennung der Polymer-Matrix erfolgte analog Vergleichsbeispiel 3, es werden jedoch 20 g PTFE-Suspensionspolymerisat (TF 1750 von Dyneon), die mit 500 kGy bestrahlt wurden, verwendet.
Die IR-spektroskopische Untersuchung des abgetrennten und gereinigten PTFE-Mikropulvers ergab starke ABS-Absorptionen neben denen des PTFE als Nachweis für chemisch gekoppeltes PTFE-ABS-Material. Im Vergleichsbeispiel 3 (physikalische Mischung) war nur reines PTFE im IR-Spektrum nachweisbar.
Die tribologischen Untersuchungen ergaben, dass das chemisch gekoppelte PTFE-ABS-Material einen vergleichbaren Gleitreibungskoeffizienten zur physikalischen Mischung aufweist, dass aber eine wesentlich erhöhte Verschleißfestigkeit zu beobachten ist. Der Verschleiß beim Klötzchen/Ring-Versuch mit dem chemisch gekoppelten Material weist eine Senkung auf 55 % im Vergleich zur physikalischen Mischung (Vergleichsbeispiel 3) auf.

### Vergleichsbeispiel 4: Schmelzemodifizierung von NBR mit PTFE-M ikropulver, unbestrahlt

40 g NBR-Elastomer werden kleingeschnitten bei 140°C im Laborkneter mit 50 U/min plastifiziert. Nach 2 Minuten werden 20 g thermisch abgebautes PTFE-Polymerisat (TF 9205 von Dyneon, unbestrahlt) zudosiert. 5 Minuten nach der PTFE-Zugabe wird der Versuch abgebrochen und das Material aus der Kneterkammer entfernt. Das NBR-Matrixmaterial wird durch Lösen in Methylenchlorid und Zentrifugieren vom PTFE-Festprodukt abgetrennt. Das Festprodukt/der Rückstand wird erneut mit Methylenchlorid aufgeschlämmt. Das Lösen/Extrahieren und Zentrifugieren wurde 4-mal wiederholt, dann das PTFE-Festprodukt abgetrennt und getrocknet.
Die IR-spektroskopische Untersuchung des abgetrennten gereinigten PTFE-Mikropulvers ergab kein chemisch gekoppeltes PTFE-NBR-Material. Es werden keine NBR-Absorptionen im IR-Spektrum gefunden. Diese physikalische PTFE-NBR-Mischung dient nach Vulkanisation als Standard für die Messung des Gleitreibungskoeffizienten bzw. der Verschleißfestigkeit im Rahmen der tribologischen Untersuchungen.

### Beispiel 7: Schmelzemodifizierung von NBR mit PTFE-Emulsionspolymerisat, bestrahlt mit 500kGy

Versuchsdurchführung und Abtrennung der Polymer-Matrix erfolgte analog Vergleichsbeispiel 4, es werden jedoch 20 g PTFE-Emulsionspolymerisat (TF 2025 von Dyneon), die mit 500 kGy bestrahlt wurden, verwendet.
Die IR-spektroskopische Untersuchung des abgetrennten und gereinigten PTFE-Mikropulvers ergab sehr starke NBR-Absorptionen neben denen des PTFE als Nachweis für chemisch gekoppeltes PTFE-NBR-Material. Im Vergleichsbeispiel 4 (physikalische Mischung) war nur reines PTFE im IR-Spektrum nachweisbar.
Die tribologischen Untersuchungen wurden an vulkanisierten Probekörpern durchgeführt - die Versuche ergaben, dass das chemisch gekoppelte PTFE-SBR-Material einen vergleichbaren Gleitreibungskoeffizienten zu der physikalischen Mischung (Vergleichbeispiel 4) aufweist, dass aber eine wesentlich erhöhte Verschleißfestigkeit zu beobachten ist. Der Verschleiß beim Klötzchen/Ring-Versuch wies eine Senkung auf 35 % auf.
Als weiterführende tribologische Untersuchung wurde kurz vor Abbruch des Laborkneterversuchs noch 0,5 Ma.-% PFPE (Perfluorpolyether, DuPont) zugegeben, was ergab, dass die vulkanisierten Probekörper Gleitreibungskoeffizienten im Vergleich zu der physikalischen Mischung (Vergleichbeispiel 4) einen um ca. 40 % niedrigeren Wert aufweist und dass eine Zunahme der Verschleißfestigkeit zu beobachten ist. Der Verschleiß beim Klötzchen/Ring-Versuch wies eine Senkung auf 15 % auf.

### Beispiel 8: Schmelzemodifizierung von NBR mit PTFE-Suspensionspolymerisat, bestrahlt mit 500kGy

Versuchsdurchführung und Abtrennung der Polymer-Matrix erfolgte analog Vergleichsbeispiel 4, es werden jedoch 20 g PTFE-Suspensionspolymerisat (TF 1750 von Dyneon), die mit 500 kGy bestrahlt wurden, verwendet.
Die IR-spektroskopische Untersuchung des abgetrennten und gereinigten PTFE-Mikropulvers ergab starke NBR-Absorptionen neben denen des PTFE als Nachweis für chemisch gekoppeltes PTFE-NBR-Material. Im Vergleichsbeispiel 4 (physikalische Mischung) war nur reines PTFE im IR-Spektrum nachweisbar.
Die tribologischen Untersuchungen wurden an vulkanisierten Probekörpern durchgeführt - die Versuche ergaben, dass das chemisch gekoppelte PTFE-SBR-Material einen vergleichbaren Gleitreibungskoeffizienten zu der physikalischen Mischung (Vergleichsbeispiel 4) aufweist, dass aber eine wesentlich erhöhte Verschleißfestigkeit zu beobachten ist. Der Verschleiß beim Klötzchen/Ring-Versuch wies eine Senkung auf 42 % auf.
Als weiterführende tribologische Untersuchung wurde kurz vor Abbruch des Laborkneterversuchs noch 0,5 Ma.-% PFPE (Perfluorpolyether, DuPont) zugegeben, was ergab, dass die vulkanisierten Probekörper Gleitreibungskoeffizienten im Vergleich zu der physikalischen Mischung (Vergleichsbeispiel 4) einen um ca. 30 % niedrigeren Wert aufweist und dass eine Zunahme der Verschleißfestigkeit zu beobachten ist. Der Verschleiß beim Klötzchen/Ring-Versuch wies eine Senkung auf 18 % auf.

### Beispiel 9: Schmelzemodifizierung von SBS mit plasmamodifizierten PTFE-Mikropulvern

40g SBS (Cariflex TR 1102 S, stabilisiert) wird bei 160°C im Laborkneter mit 60 U/min aufgeschmolzen. Nach 3 Minuten werden 20 g plasmabehandeltes PTFE (TF 9205, thermisch abgebaut, Dyneon, mit Sauerstoffplasma modifiziert) zudosiert. 5 Minuten nach der PTFE-Zugabe wird der Versuch abgebrochen und das Material aus der Kneterkammer entfernt. Das SBS-Matrixmaterial wird durch Lösen in Methylenchlorid und Zentrifugieren vom PTFE-Festprodukt abgetrennt. Das Festprodukt/der Rückstand wird erneut mit Methylenchlorid aufgeschlämmt. Das Lösen/Extrahieren und Zentrifugieren wurde 4-mal wiederholt, dann das PTFE-Festprodukt abgetrennt und getrocknet. Die IR-spektroskopische Untersuchung der abgetrennten gereinigten PTFE-Mikropulver ergab SBS-Absorptionen neben denen des PTFE was chemisch gekoppeltes PTFE-SBS-Material nachweist. Im Vergleichsbeispiel 1, d. h. bei dem Versuch mit unbestrahltem PTFE-Mikropulver (physikalische Mischung) war nur reines PTFE im IR-Spektrum nachweisbar.
Die tribologischen Untersuchungen ergaben, dass die chemisch gekoppelte PTFE-SBS-Materialien dieses Beispiels vergleichbare Gleitreibungskoeffizienten zur physikalischen Mischung aufweisen, dass aber eine erhöhte Verschleißfestigkeit zu beobachten ist. Der Verschleiß beim Klötzchen/Ring-Versuch mit dem chemisch gekoppelten Material weist eine Senkung des Verschleißes um 20 % bis 35 % im Vergleich zur physikalischen Mischung (Vergleichsbeispiel 1) auf.

## Patentansprüche

1. Radikalisch gekoppelte PTFE-Polymer-Compounds, bestehend aus strahlenchemisch und/oder plasmachemisch modifizierten PTFE-Pulvem, an deren Partikeloberfläche olefinisch ungesättigte Polymere in Schmelze über eine reaktive Umsetzung chemisch radikalisch gekoppelt sind.

2. Radikalisch gekoppelte PTFE-Polymer-Compounds nach Anspruch 1, bei denen die Bindungsstelle der olefinisch ungesättigte Polymere mit der PTFE-Partikeloberfläche an der Polymerkette statistisch verteilt ist.

3. Radikalisch gekoppelte PTFE-Polymer-Compounds nach Anspruch 1, bei denen das PTFE-Pulver strahlenchemisch modifiziert ist.

4. Radikalisch gekoppelte PTFE-Polymer-Compounds nach Anspruch 3, bei denen das PTFE-Pulver mit einer Strahlendosis von größer 50 kGy strahlenchemisch modifiziert ist.

5. Radikalisch gekoppelte PTFE-Polymer-Compounds nach Anspruch 4, bei denen das PTFE-Pulver mit einer Strahlendosis von größer 100 kGy strahlenchemisch modifiziert ist.

6. Radikalisch gekoppelte PTFE-Polymer-Compounds nach Anspruch 1, bei denen das PTFE-Pulver in Gegenwart von Reaktanten strahlenchemisch modifiziert ist.

7. Radikalisch gekoppelte PTFE-Polymer-Compounds nach Anspruch 6, bei denen das PTFE-Pulver unter Sauerstoffeinfluss strahlenchemisch modifiziert ist.

8. Radikalisch gekoppelte PTFE-Polymer-Compounds nach Anspruch 1, bei denen die Polymere olefinisch ungesättigten Gruppen in der Hauptkette und/oder in der Seitenkette besitzen.

9. Radikalisch gekoppelte PTFE-Polymer-Compounds nach Anspruch 1, bei denen als olefinisch ungesättigte Polymere SBS, ABS, SBR, NBR, NR sowie weitere Butadien- und/oder Isopren-Homo-, -Co- oder -Ter-Polymere radikalisch gekoppelt sind.

10. Verfahren zur Herstellung von radikalisch gekoppelten PTFE-Polymer-Compounds nach einem der Ansprüche 1 bis 9, bei dem PTFE-Pulver mit reaktiven Perfluoralkyl-(peroxy-)Radikal-Zentren nach einer strahlenchemischen und/oder plasmachemischen Modifizierung in Schmelze unter Zugabe von olefinisch ungesättigten Polymeren reaktiv umgesetzt werden.

11. Verfahren nach Anspruch 10, bei dem strahlenchemisch modifiziertes PTFE-Pulver eingesetzt wird.

12. Verfahren nach Anspruch 10, bei dem das PTFE-Pulver mit einer Strahlendosis von größer 50 kGy strahlenchemisch modifiziert wird.

13. Verfahren nach Anspruch 12, bei dem das PTFE-Pulver mit einer Strahlendosis von größer 100 kGy strahlenchemisch modifiziert wird.

14. Verfahren nach Anspruch 10, bei dem das PTFE-Pulver in Gegenwart von Reaktanden strahlenchemisch modifiziert wird.

15. Verfahren nach Anspruch 14, bei dem das PTFE-Pulver unter Sauerstoffeinfluss strahlenchemisch modifiziert wird.

16. Verfahren nach Anspruch 10, bei dem das PTFE-Pulver als Mikropulver eingesetzt wird.

17. Verfahren nach Anspruch 10, bei dem die Reaktion in Schmelze in einem Schmelzemischer realisiert wird.

18. Verfahren nach Anspruch 17, bei dem die Reaktion in Schmelze in einem Extruder realisiert wird.

19. Verfahren nach Anspruch 10, bei dem Polymere mit olefinisch ungesättigten Gruppen in der Hauptkette und/oder in der Seitenkette eingesetzt werden.

20. Verfahren nach Anspruch 10, bei dem als olefinisch ungesättigte Polymere SBS, ABS, SBR, NBR, NR sowie weitere Butadien- und/oder Isopren-Homo-, -Co- oder -Ter-Polymere eingesetzt werden.

## Claims

1. Radically coupled PTFE polymer compounds comprising radiation-chemically and/or plasma-chemically modified PTFE powders, on the particle surfaces of which olefinically unsaturated polymers are chemically radically coupled via a reactive conversion into melt.

2. Radically coupled PTFE polymer compounds according to claim 1, in which the bonding site of the olefinically unsaturated polymers with the PTFE particle surface is randomly distributed on the polymer chain.

3. Radically coupled PTFE polymer compounds according to claim 1, in which the PTFE powder is radiation-chemically modified.

4. Radically coupled PTFE polymer compounds according to claim 3, in which the PTFE powder is radiation-chemically modified with a radiation dose greater than 50 kGy.

5. Radically coupled PTFE polymer compounds according to claim 4, in which the PTFE powder is radiation-chemically modified with a radiation dose greater than 100 kGy.

6. Radically coupled PTFE polymer compounds according to claim 1, in which the PTFE powder is radiation-chemically modified in the presence of reactants.

7. Radically coupled PTFE polymer compounds according to claim 6, in which the PTFE powder is radiation-chemically modified under the influence of oxygen,

8. Radically coupled PTFE polymer compounds according to claim 1, in which the polymers have olefinically unsaturated groups in the main chain and/or in the side chain.

9. Radically coupled PTFE polymer compounds according to claim 1, in which SBS, ABS, SBR, NBR, NR and other butadiene and/or isoprene-homo-, -co- or -ter-polymers are radically coupled as olefinically unsaturated polymer.

10. Method for producing radically coupled PTFE polymer compounds according to one of claims 1 through 9, in which PTFE powders are reactively converted with reactive perfluoroalkyl-(peroxy) radical centers after a radiation-chemical and/or plasma-chemical modification into a melt with the addition of olefinically unsaturated polymers.

11. Method according to claim 10, in which radiation-chemically modified PTFE powder is used.

12. Method according to claim 10, in which the PTFE powder is radiation-chemically modified with a radiation dose greater than 50 kGy.

13. Method according to claim 12, in which the PTFE powder is radiation-chemically modified with a radiation dose greater than 100 kGy.

14. Method according to claim 10, in which the PTFE powder is radiation-chemically modified in the presence of reactants.

15. Method according to claim 14, in which the PTFE powder is radiation-chemically modified under the influence of oxygen.

16. Method according to claim 10, in which the PTFE powder is used as a micropowder.

17. Method according to claim 10, in which the reaction into a melt is realized in a melt mixer.

18. Method according to claim 17, in which the reaction into a melt is realized in an extruder.

19. Method according to claim 10, in which polymers with olefinically unsaturated groups in the main chain and/or in the side chain are used.

20. Method according to claim 10 in which as olefinically unsaturated polymers, SBS, ABS, SBR, NBR, NR and other butadiene- and/or isoprene-homo-, -co- or-ter-polymers are used.

## Revendications

1. Composés de polymère PTFE couplés par voie radicalaire, constitués par des poudre de FTFE modifiées chimiquement par un rayonnement et/ou par un plasma, sur la surface des particules desquels sont couplés chimiquement par voie radicalaire des polymères oléfiniquement insaturés en masse fondue via une transformation réactive.

2. Composés de polymère PTFE couplés par voie radicalaire selon la revendication 1, dans lesquels le site de liaison des polymères oléliniquement insaturés avec la surface des particules de PTFE est réparti statistiquement sur la chaîne polymère.

3. Composés de polymère PTFE couplés par voie radicalaire selon la revendication 1, dans lesquels la poudre de PTFE est modifiée chimiquement par un rayonnement.

4. Composés de polymère PTFE couplés par voie radicalaire selon la revendication 3, dans lesquels la poudre de PTFE est modifiée chimiquement par un rayonnement avec une dose de rayonnement supérieure à 50 kGy.

5. Composés de polymère PTFE couplés par voie radicalaire selon la revendication 4, dans lesquels la poudre de PTFE est modifiée chimiquement par un rayonnement avec une dose de rayonnement supérieure à 100 kGy.

6. Composés de polymère PTFE couplés par voie radicalaire selon la revendication 1, dans lesquels la poudre de PTFE est modifiée chimiquement par un rayonnement en présence de réactif.

7. Composés de polymère PTFE couplés par voie radicalaire selon la revendication 6, dans lesquels la poudre de PTFE est modifiée chimiquement par un rayonnement sous l'influence de l'oxygène.

8. Composés de polymère PTFE couplés par voie radicalaire selon la revendication 1, dans lesquels les polymères présentent des groupes oléfiniquement insaturés dans la chaîne principale et/ou dans la chaîne latérale.

9. Composés de polymère PTFE couplés par voie radicalaire selon la revendication 1, dans lesquels sont couplés par voie radicalaire, comme polymères oléfiniquement insaturés, du SBS, de l'ABS, du SBR, du SBR, du NR ainsi que d'autres homopolymères, copolymères ou terpolymères du butadiène et/ou de l'isoprène.

10. Procédé pour la préparation de composés de polymère PTFE couplés par voie radicalaire selon l'une quelconque des revendications 1 à 9, dans lequel des poudres de PTFE avec des centres réactifs de type radicaux perfluoroalkyl-(peroxy-) sont transformés réactivement après une modification chimique par rayonnement et/ou par plasma en masse fondue en ajoutant des polymères oléfiniquement insaturés.

11. Procédé selon la revendication 10, dans lequel on utilise des poudres de PTFE modifiées chimiquement par un rayonnement.

12. Procédé selon la revendication 10, dans lequel la poudre de PTFE est modifiée chimiquement par un rayonnement par une dose de rayonnement supérieure à 50 kGy.

13. Procédé selon la revendication 12, dans lequel la poudre de PTFE est modifiée chimiquement par un rayonnement par une dose de rayonnement supérieure à 100 kGy,

14. Procédé selon la revendication 10, dans lequel la poudre de PTFE est modifiée chimiquement par_ un rayonnement en présence de réactifs.

15. Procédé selon la revendication 14, dans lequel la poudre de PTFE est modifiée chimiquement par un rayonnement sous l'influence de l'oxygène.

16. Procédé selon la revendication 10, dans lequel la poudre de PTFE est utilisée en tant que micropoudre.

17. Procédé selon la revendication 10, dans lequel la réaction en masse fondue est réalisée dans un mélangeur de masse fondée.

18. Procédé selon la revendication 17, dans lequel la réaction en masse fondue est réalisée dans une extrudeuse.

19. Procédé selon la revendication 10, dans lequel on utilise des polymères avec des groupes oléfiniquement insaturés dans la chaîne principale et/ou dans la chaîne latérale.

20. Procédé selon la revendication 10, dans lequel on utilise, comme polymères oléfiniquement insaturés, du SBS, de l'ABS, du SBR, du NBR, du NR ainsi que d'autres homopolymères, copolymères ou terpolymères du butadiène et/ou de l'isoprène.
